Europäisches Patentamt

European Patent Office

Office européen des brevets

(19)

(11) Numéro de publication : **0 348 376 B1**

## (12) FASCICULE DE BREVET EUROPEEN

(45) Date de publication du fascicule du brevet :
**09.12.92 Bulletin 92/50**

(51) Int. Cl.$^5$ : **A01C 7/06, A01C 7/04**

(21) Numéro de dépôt : **89870087.7**

(22) Date de dépôt : **09.06.89**

(54) **Dispositif de semoir de précision pour semer simultanément, d'une part, des graines et,d'autre part, une quantité déterminée de matières actives.**

(30) Priorité : **22.06.88 BE 8800711**

(43) Date de publication de la demande :
**27.12.89 Bulletin 89/52**

(45) Mention de la délivrance du brevet :
**09.12.92 Bulletin 92/50**

(84) Etats contractants désignés :
**BE DE FR GB IT NL**

(56) Documents cités :
**FR-A- 396 651**
**FR-A- 1 180 554**
**FR-A- 2 053 831**
**FR-E- 67 063**

(73) Titulaire : **S.A. WARCOING**
**Rue de la Sucrerie 1**
**B-7750 Warcoing (BE)**

(72) Inventeur : **Duchatelet, Albert**
**Rue des Tanneurs 12**
**B-7731 Estaimbourg (BE)**

(74) Mandataire : **Dellicour, Paul**
**Office de Brevets E. Dellicour rue Fabry 18/012**
**B-4000 Liège (BE)**

EP 0 348 376 B1

# Description

Actuellement avec un semis de précision à distance réglable un système de distribution du type micro-granulateur dépose en continu dans la ligne de semis des matières actives principalement insecticides.

Grâce à l'amélioration de la qualité germinative des graines, l'espacement entre graines augmente d'année en année, ce qui diminue la quantité de semence utilisée à l'Ha. De ce fait la même quantité de matière active localisée dans la ligne, devient excédentaire par graine car elle dépasse la dose nécessaire par plante.

D'autre part, en cas d'espacement plus élevé entre graines, la matière active déposée en continu et située à mi-distance entre les graines risque de s'avérer inutilisable car trop éloignée de la graine ou des racines de la plante.

On connaît par le brevet FR-A-1 180 554 un semoir-distributeur se caractérisant en ce que, simultanément ou séparément, il est possible de semer des graines une par une et de distribuer de l'engrais en quantité appropriée. Cette action s'effectue au moyen d'une bande transporteuse alvéolée.

Une charrue avec mécanisme simultanément actionné pour planter les pommes de terre et pour répandre l'engrais est décrit dans le brevet FR-A-396 651. Cette charrue comporte un récipient à pommes de terre et à engrais compartimenté disposé au-dessus d'une roue conique possédant, d'une part, une ouverture correspondant à la grosseur d'une pomme de terre et un canal donnant passage à la quantité voulue d'engrais.

Le brevet FR-A-2 053 831 décrit une machine de plantation comportant des moyens distributeurs permettant de déposer successivement des graines et de la vermiculite par dessus les graines. Cette machine fait appel à l'introduction d'un jet de gaz sous pression à la sortie desdits moyens distributeurs.

Par le brevet FR-E-67063 est connu un semoir-distributeur d'engrais comportant un rotor alvéolé adapté à la distribution régulière des graines et/ou de l'engrais. Ce dispositif permet de semer simultanément, d'une part, des graines et, d'autre part, de l'engrais et réalise une fragmentation du débit continu des produits pour le tranformer en un débit discontinu, l'opération s'effectuant en même temps que le dépôt de la graine et au même endroit.

Le dispositif suivant l'invention a pour but d'améliorer les réalisations connues, et en particulier celle du brevet FR-E-67063, qui est considéré comme l'état de la technique le plus proche. Ces améliorations sont effectuées par les éléments techniques de la partie caractérisante de la revendication 1.

Dans le dispositif semeur suivant l'invention, destiné à semer simultanément, d'une part, des graines et, d'autre part, des produits ou matières actives, et comportant un appareil de distribution pour lesdits produits ou matières actives, ledit appareil étant réglable en annexe par rapport à une trémie pour renfermer les graines, et un disque semeur dans la couronne périphérique duquel sont disposées des alvéoles à graines, le disque semeur comporte des chambres ou espaces alvéolaires ou est muni d'une pièce rapportée comportant ces chambres ou espaces alvéolaires servant à réaliser une fragmentation des produits ou matières actives, et une alimentation est disposée à la base du disque semeur ou de la pièce rapportée à hauteur de l'arrière du soc pour n'introduire les produits ou les matières actives dans lesdites chambres ou espaces alvéolaires que juste avant ou pendant l'éjection de la graine.

L'invention est décrite maintenant avec plus de détails sur la base des dessins annexés, à titre d'exemples uniquement, montrant en :

Figures 1 à 3 respectivement une vue d'un disque semeur de graines et localisateur de produit suivant l'invention, une coupe par 2-2 de figure 1 et un développement dudit disque ;

Figures 4 à 6 respectivement des figures analogues aux figures 1 à 3 dans une variante de réalisation;

Figures 7 et 8 respectivement une coupe au travers d'un disque semeur de graines et localisateur de produit en deux parties et son développement ;

Figures 9 et 10 respectivement des figures analogues aux figures 7 et 8 dans une variante de réalisation;

Figures 11 à 13B respectivement des figures analogues aux figures 1 à 3 dans une autre variante de réalisation en deux parties ;

Figures 14 à 16B respectivement des figures analogues aux figures 1 à 3 encore dans une autre variante de réalisation en deux parties ;

Figures 17 à 19B respectivement des figures analogues aux figures 1 à 3 dans une variante de réalisation supplémentaire en deux parties.

Comme on le voit aux dessins, dans la couronne périphérique 1 du disque semeur sont disposées en vis à vis de chaque alvéole à graines 2, et répartie sur toute la périphérie, des chambres ou espaces alvéolaires 3 destinés à recevoir en cours de marche de ce disque semeur le produit à déposer au niveau de la graine, et ce en même temps et aux mêmes endroits que le dépôt de cette graine dans la ligne de semis.

L'alimentation en produit des chambres ou espaces alvéolaires 3 s'effectue en continu à partir d'un appareil distributeur. Sa localisation dans la ligne de semis devient discontinue grâce au fractionnement de la distribution effectué par ces chambres ou espaces alvéolaires 3.

L'invention est concrétisée au niveau de l'alimentation en produit des chambres ou espaces alvéolaires et de la distribution de ces produits sur les lignes de semis par deux réalisations différentes mais de principe identique.

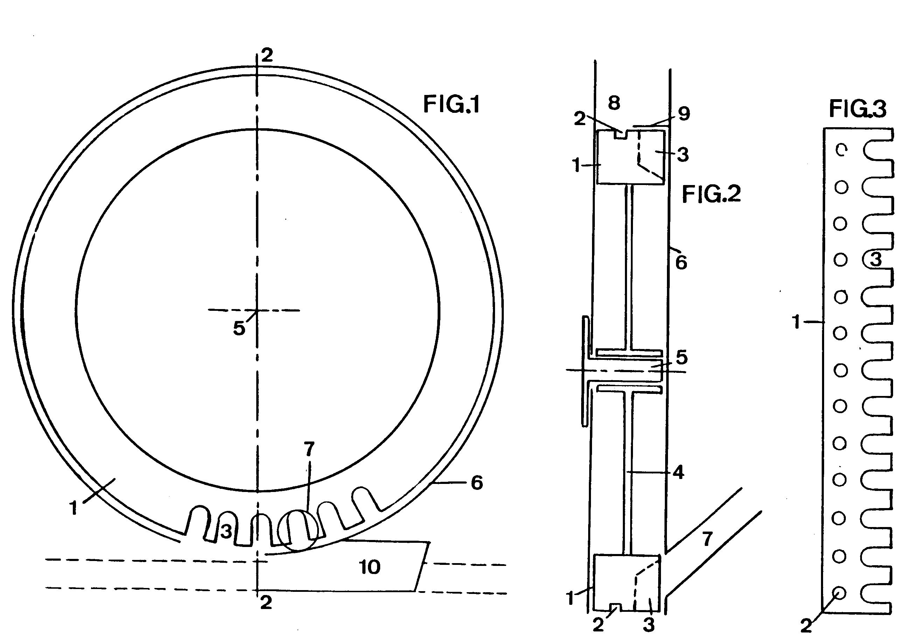

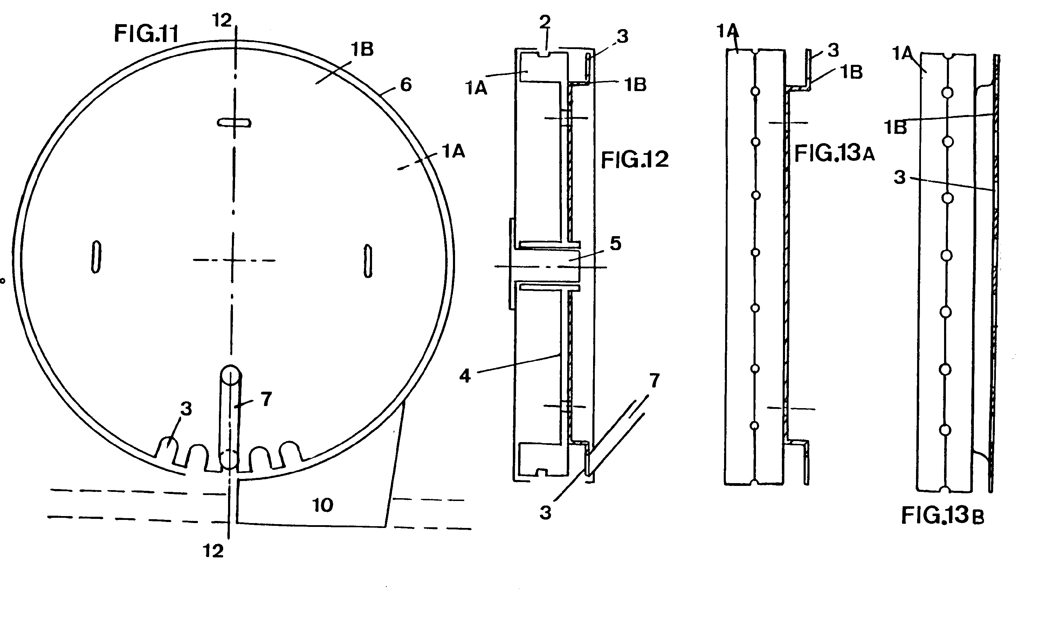

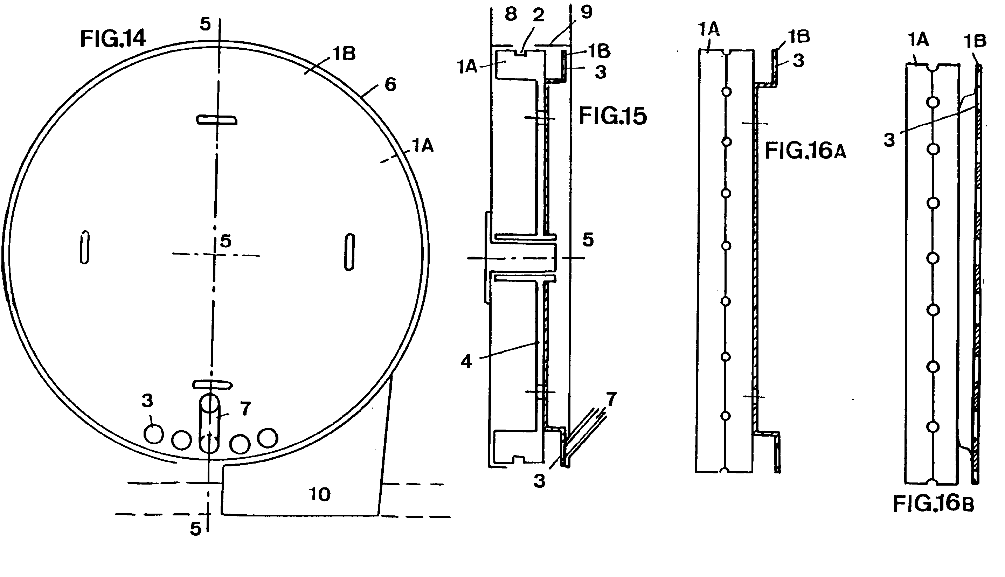

Les figures 1 à 3, 11 à 13 et 14 à 16, représentent un disque semeur avec des chambres ou espaces alvéolaires 3 qui sont latéraux de forme parallélipipédique ou autre.

On voit en 4 la partie interne du disque, en 5 l'axe du disque, en 6 la carrosserie externe du disque, en 7 le tube d'alimentation en produit ou matières actives, en 8 la trémie à graines et en 9 la fermeture des chambres alvéolaires 3 au niveau de la trémie à graines 8.

Les chambres ou espaces alvéolaires 3, qui sont latéraux et de forme parallélipipédique ou autre, sont disposés en vis à vis des alvéoles 2 de distribution de graines et leur alimentation en produits ou matières actives s'effectue latéralement à la base de l'élément semeur hauteur de l'arrière du soc 10, juste avant ou pendant éjection.

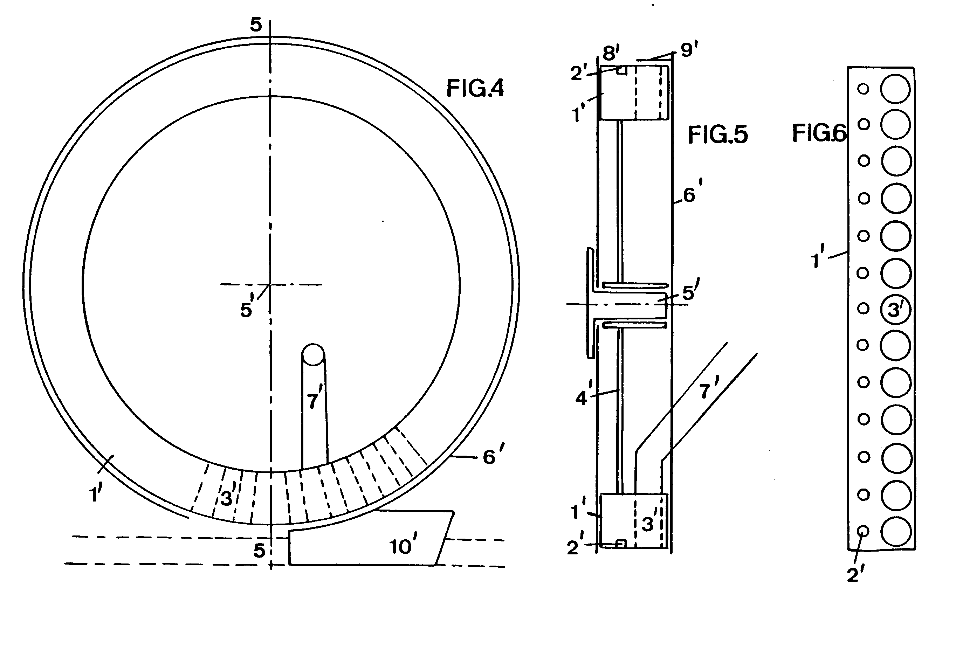

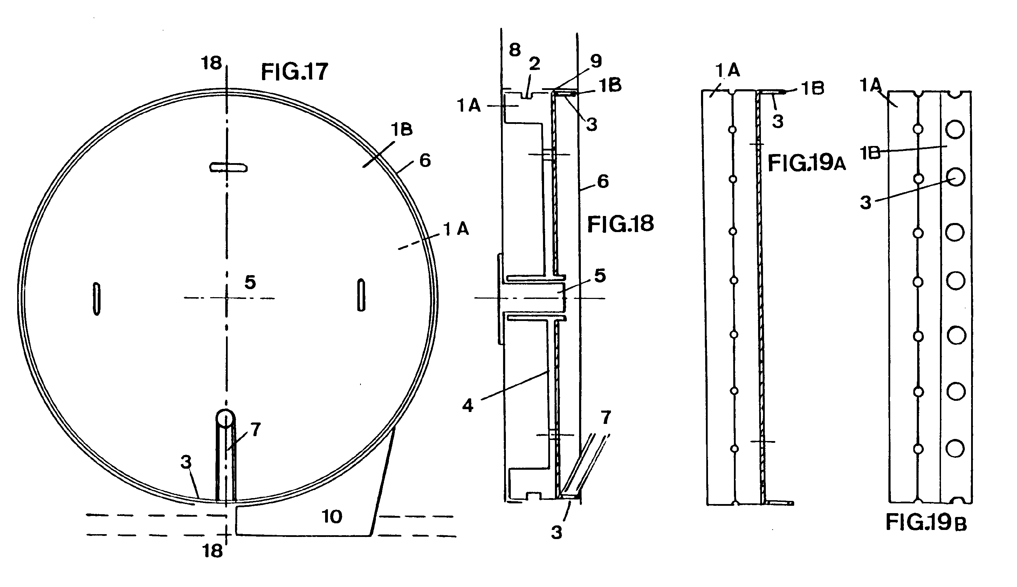

Les figures 4 à 6 et 17 à 19 représentent un disque semeur avec des chambres ou espaces alvéolaires 3′ qui sont centraux et de forme cylindrique ou autre. On voit en 4′ la partie interne du disque, en 5′ l'axe du disque, en 6′ la carrosserie externe du disque, en 7′ le tube d'alimentation en produit ou matières actives, en 8′ la trémie à graines et en 9′ la fermeture des chambres alvéolaires 3′ au niveau de la trémie à graines 8′.

Les chambres ou espaces alvéolaires 3′ de forme cylindrique ou autre sont percées verticalement au travers de la couronne 1′ du disque et sont disposés en vis à vis des alvéoles 2′ de distribution de graines. Leur alimentation en produit s'effectue d'une manière centrale à l'intérieur du disque du haut vers le bas et à la base de l'élément semeur à hauteur de l'arrière du soc 10′, juste avant ou pendant éjection.

Les chambres ou espaces alvéolaires latéraux 3 ou centraux 3′ sont disposés dans la couronne périphérique (1,1′) du disque semeur (figures 2,5,12,15,18). Leur volume et leur disposition en une rangée ou en plusieurs rangées par rapport aux alvéoles à graines 2,2′, permettant une localisation en discontinu dans la ligne de semis d'une seule ou de plusieurs matières actives ou produits différents, sont déterminés lors de la confection de la couronne périphérique du disque semeur, suivant le type de localisation souhaité : sur la graine, en avant ou en arrière de la graine, etc.

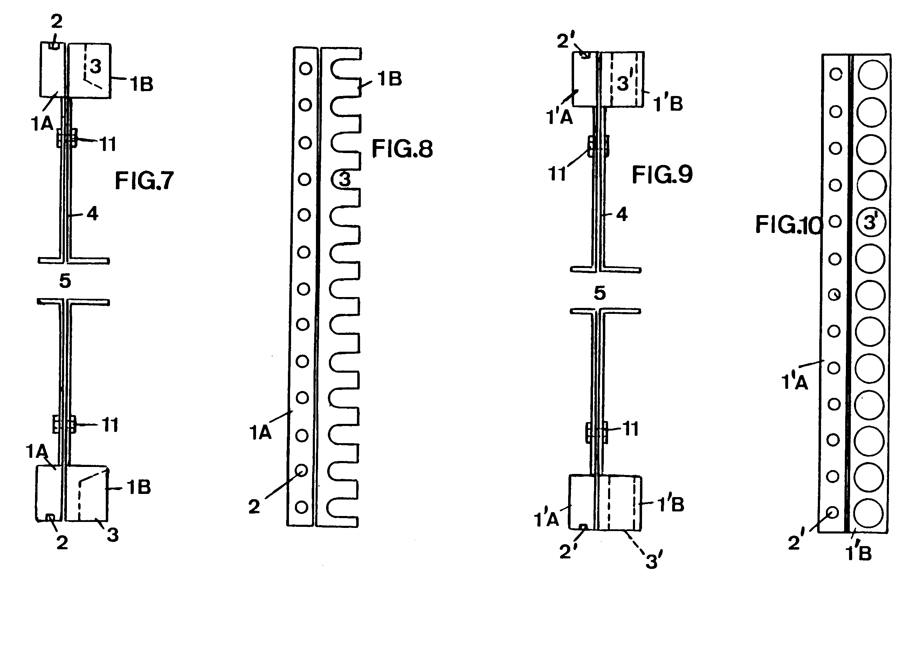

Suivant une variante (figures 7 à 19), les chambres ou espaces alvéolaires 3,3′ de forme de volume déterminé sont disposés dans une ou plusieurs couronnes périphériques indépendantes de celle qui comporte les alvéoles 2,2′ distributrices de graines.

Ces couronnes sont ensuite juxtaposées et rendues solidaires, permettant ainsi une localisation en discontinu dans la ligne de semis d'un seul produit ou de plusieurs produits différents en même temps que le dépôt des graines.

Le positionnement des chambres ou espaces alvéolaires 3,3′ des différentes couronnes par rapport aux alvéoles à graines 2,2′ peut être modifié à tout moment en faisant glisser les couronnes les unes par rapport aux autres.

En figures 7 et 8, 12 et 13, 15 et 16, est représenté un disque en deux parties avec alvéoles à graines 2 et chambres ou espaces alvéolaires latéraux 3. On voit en 1A la couronne périphérique avec ses alvéoles à graines 2 et en 1B la couronne périphérique avec ses chambres ou espaces alvéolaires latéraux 3, en 4 la partie interne des deux éléments de disque, en 5 l'axe des deux éléments de disque et en 11 la fixation par vis, boulons ou autres éléments destinée à rendre solidaires les deux éléments de disque.

En figures 9 et 10, 18 et 19 est représenté un disque en deux parties avec alvéoles à graines 2′ et chambres ou espaces alvéolaires centraux 3′. On voit en 1′A la couronne périphérique avec ses alvéoles à graines 2′ et en 1′B la couronne périphérique avec ses chambres ou espaces alvéolaires centraux 3′, les autres éléments étant désignés par les mêmes indices qu'en figure 7.

**Revendications**

1.  Dispositif destiné à semer simultanément, d'une part, des graines et, d'autre part, des produits ou matières actives, et comportant un appareil de distribution pour lesdits produits ou matières actives, ledit appareil étant réglable en annexe par rapport à une trémie (8,8′) pour renfermer les graines, et un disque semeur (1,1′,1A,1′A) dans la couronne périphérique duquel sont disposées des alvéoles à graines (2,2′), caractérisé en ce que le disque semeur comporte des chambres ou espaces alvéolaires (3,3′) ou est muni d'une pièce rapportée (1B,1′B) comportant ces chambres ou espaces alvéolaires (3,3′) servant à réaliser une fragmentation des produits ou matières actives, et en ce qu'une alimentation (7,7′) est disposée à la base du disque semeur ou de la pièce rapportée à hauteur de l'arrière du soc pour n'introduire les produits ou les matières actives dans lesdites chambres ou espaces alvéolaires que juste avant ou pendant l'éjection de la graine.

2.  Dispositif semeur suivant la revendication 1, caractérisé en ce qu'il comporte un ou plusieurs disques semeurs (1,1′, 1A,1′A, 1B,1′B) pourvus sur sa ou leur périphérie d'une ou plusieurs séries parallèles d'alvéoles à graines (2,2′) et de chambres ou espaces alvéolaires (3,3′) pour produits ou matières actives.

3.  Dispositif semeur suivant la revendication 1, caractérisé en ce que les chambres ou espaces alvéolaires (3′) sont centraux sous forme cylindrique ou autre.

4. Dispositif semeur suivant la revendication 1, caractérisé en ce que les chambres ou espaces alvéolaires (3) sont latéraux, sous forme parallélipipédique ou autre.

## Claims

1. Device to be used for sowing simultaneously on the one hand grain, and on the other hand products or active materials, and comprising a device for distributing the said products or active materials, the said device being additionally adjustable relative to a hopper (8,8′) for containing the grain, and a sowing disc (1,1′,1A,1′A) in the peripheral crown of which there are disposed grain ducts (2,2′), characterised in that the sowing disc comprises alveolar cells or spaces (3,3′), or is equipped with an additional part (1B,1′B) comprising these alveolar cells or spaces (3,3′) used to create fragmentation of the products or active materials, and in that a supply unit (7,7′) is disposed at the base of the sowing disc or the part added at the level of the rear of the ploughshare, in order to introduce the products or active materials into the said alveolar cells or spaces only just before or during ejection of the grain.

2. Sowing device according to claim 1, characterised in that it comprises one or a plurality of sowing discs (1,1′, 1A,1′A, 1B,1′B) provided on the periphery thereof with one or a plurality of parallel series of grain ducts (2,2′) and alveolar cells or spaces for products or active materials.

3. Sowing device according to claim 1, characterised in that the alveolar cells or spaces (3′) are central in cylindrical or another form.

4. Sowing device according to claim 1, characterised in that the alveolar cells or spaces (3) are lateral, in parallelepiped or another form.

## Patentansprüche

1. Vorrichtung zum gleichzeitigen Aussäen sowohl von Samen als auch von wirksamen Produkten oder Materialien (Wirkstoffen), mit einer Ausgabevorrichtung für diese aktiven Produkte oder Materialien, wobei diese Vorrichtung in einem Bereich neben einem Samenaufnahmebehälter (8, 8′) regulierbar ist, sowie mit einer Säscheibe (1, 1′, 1A, 1′A), in deren Außenkranz Zellen (2, 2′) für die Samen angeordnet sind, dadurch gekennzeichnet, daß die Säscheibe zellenartige Kammern oder Räume (3, 3′) aufweist oder mit einem Anbauteil (1B, 1′B) versehen ist, das diese zellenartigen Kammern oder Räume (3, 3′) aufweist, die zur Abteilung der wirksamen Produkte oder Materialien dienen, und daß am Fuß der Säscheibe oder des Anbauteils auf der Höhe der Rückseite des Scharmessers eine Beschickungseinrichtung (7, 7′) angeordnet ist, um die wirksamen Produkte oder Materialien lediglich gerade vor oder während des Samenauswurfes in die zellenartigen Kammern oder Räume einzubringen.

2. Sävorrichtung nach Anspruch 1, dadurch gekennzeichnet, daß sie eine oder mehrere Säscheibe(n) (1, 1′, 1A, 1′A, 1B, 1′B) aufweist, die an ihrem Umfang mit einer oder mehreren parallelen Reihe(n) von Zellen (2, 2′) für die Samen und von zellenartigen Kammern oder Räumen (3,3′) für wirksame Produkte oder Materialen versehen ist bzw. sind.

3. Sävorrichtung nach Anspruch 1, dadurch gekennzeichnet, daß die zellenartigen Kammern oder Räume (3′) von zylindrischer oder dergl. Gestalt zentral angeordnet sind.

4. Sävorrichtung nach Anspruch 1, dadurch gekennzeichnet, daß die zellenartigen Kammern oder Räume (3) von parallelepipedförmiger oder dergl. Gestalt seitlich angeordnet sind.

FIG.3

FIG.2

FIG.1

FIG.4

FIG.5

FIG.6

5

5'

7'

3'

6'

1'

5

10'

2' 8' 9'

1'

6'

5'

4'

7'

1'

3'

2'

1'

3'

2'

2'

EP 0 348 376 B1

6

FIG.7

FIG.8

FIG.9

FIG.10

EP 0 348 376 B1

FIG.11

12

1B

6

1A

8

3

7

10

12

2

3

1A

1B

5

4

3

7

FIG.12

1A

3

1B

FIG.13A

1A

1B

3

FIG.13B

EP 0 348 376 B1

FIG.16B

FIG.16A

FIG.15

FIG.14

EP 0 348 376 B1

FIG.17

FIG.18

FIG.19A

FIG.19B